# EUROPÄISCHE PATENTSCHRIFT

(11) **EP 3 156 281 B1**
(45) Veröffentlichungstag und Bekanntmachung des Hinweises auf die Patenterteilung: **04.12.2019**
(21) Anmeldenummer: 16002144.0
(22) Anmeldetag: 05.10.2016
(51) Int. Cl.: B60P 1/44

(54) **SYSTEM ZUM BE- UND ENTLADEN**
SYSTEM FOR LOADING AND UNLOADING
SYSTÈME DE CHARGEMENT ET DE DÉCHARGEMENT

(30) Priorität: 13.10.2015 DE 102015117432
(43) Veröffentlichungstag der Anmeldung: 19.04.2017
(73) Patentinhaber: Wietmarscher Ambulanz- und Sonderfahrzeug GmbH, 49835 Wietmarschen (DE)
(72) Erfinder: Gotthardt, Daniel, 22397 Hamburg (DE)
(74) Vertreter: Willems, Volker

(56) Entgegenhaltungen:
- EP-A1- 1 918 157
- DE-A1-102014 100 056
- DE-U1- 8 710 027
- US-A1- 2003 044 266
- US-B2- 6 825 628

## Beschreibung

### Technisches Gebiet

Die Erfindung betrifft eine Be- und Entladevorrichtung für Ambulanz- oder Transportfahrzeuge, enthaltend:
a) eine Be- und Entladeöffnung mit einer ersten Funktionsvorrichtung zum Be- und Entladen,
b) einen Antrieb zum Betätigen der ersten Funktionsvorrichtung,
c) eine Antriebssteuerung, welche den Antrieb ansteuert,
d) einen Betätigungsmechanismus zum Betätigen der Antriebssteuerung,
e) eine zweite Funktionsvorrichtung zum Be- und Entladen, deren Antrieb von der Antriebssteuerung angesteuert wird.

### Beschreibung

Bei Ambulanz- oder Transportfahrzeugen müssen von den agierenden Personen oft große Lasten aus den Fahrzeugen gehoben werden. Da der Ambulanz- bzw. Frachtraum üblicherweise zum Boden nicht ebenerdig ist, muss die Höhendifferenz zwischen Boden und Frachtraumboden beim Be- bzw. Entladen überwunden werden. Hierfür haben die Fahrzeuge eine Be- und Entladevorrichtung, oft mit einer Rampe, auf der die Lasten bewegt werden können. Die Rampe ist dabei als Hubplattform ausgebildet, mit deren Hilfe der Abstand zwischen der Ebene des Bodens und der Ebene des Frachtraumbodens überwunden wird. Die Rampe ist üblicherweise am Heck des Frachtraums angeordnet. Da die Rampe bei einem Ambulanzfahrzeug die Hecköffnung nicht dicht abschließt, sind hier zusätzlich Türen vorgesehen. Zum Ein- und Ausladen ist zunächst die Rampe von dem Heck runter zu klappen und die Türe zu öffnen. Hier sind verschiedene Reihenfolgen hinsichtlich des Öffnens und Schließens einzuhalten. Für eine einzelne Person ist dieses oft auch sehr umständlich.

### Stand der Technik

Aus der DE 87 10 027 U1 ist eine Vorrichtung zum Be- und Entladen von Lasten an ortsfesten oder ortsveränderlichen Ladestationen, insbesondere an einer Ladebordwand eines Lastfahrzeuges , bekannt. Die Vorrichtung besteht im Wesentlichen aus einer Ladeplattform, die hydraulisch heb-, senk- und neigbar ausgebildet ist. Ladebordwände gehören zu den Ladehilfen für Lastkraftwagen, wozu auch Lifte und Schwenkladelifte gehören. Am meisten verbreitet sind die Ladebordwände, die in der Regel am Fahrzeugheck angebracht sind und im Wesentlichen aus einer Ladeplattform bestehen, die mittels drehbarer Tragarme über Kolben-Zylindereinheiten, d.h. hydraulisch heb-, senk- und neigbar ausgebildet ist.

Die DE 298 06 643 U1 betrifft eine in Fahrzeugen wie Pkw installierbare Auffahrhilfe zum Ein- bzw. Ausladen eines Krankenfahrzeuges od. dgl. Es ist bekannt, Krankenfahrzeuge zwecks Überwindung größerer Entfernungen vorübergehend in anderweitige Fahrzeuge wie z. B. Pkw zu verladen. Hierzu und auch zum Entladen bedarf es jedoch für Kranke und Behinderte aufgrund ihrer mangelnden Beweglichkeit und Kraftreserven und auch wegen des mitunter hohen Gewichtes derartiger Krankenfahrzeuge einer unterstützenden Einrichtung. Im einfachsten Falle sind dies Rampen, die paarweise an die Ladeöffnung des Transportfahrzeuges angelegt werden, um ein Auf- bzw. Abfahren des Krankenfahrzeuges zu ermöglichen. Derartige Rampen sind aus Platzgründen teleskopartig ausgebildet und werden vor ihrem Einsatz erst auf ihre volle Länge gebracht und danach wieder zusammengeschoben. Es sind deshalb teilweise oder vollständig mechanisierte Einrichtungen bekannt, die dem Betreiber den Kraft- und Bewegungsaufwand völlig abnehmen. Beispielsweise können dies mittels Hydraulik oder eines anderweitigen Antriebes aus einem Staubereich des Transportfahrzeuges ausfahrbare Rampen oder Bühnen sein, die dem Krankenfahrzeug das Ausfahren aus dem Transportfahrzeug entweder vollständig (Rampe) oder teilweise (Hubbühne) gestatten und umgekehrt. Derartige Einrichtungen haben ihre Berechtigung dann, wenn der Kranke oder Behinderte überhaupt nicht in der Lage ist, mit Ausnahme der Steuerung des Vorgangs einen aktiven Beitrag zum Ver- oder Entladen des Krankenfahrzeuges zu leisten.

Die US 2003 / 044266 A1 beschreibt ein Fahrzeug mit einem Absenkpumpsystem für ein Fahrzeug und ein Rampenpumpensystem. Das Absenkpumpensystem senkt das hintere Ende des Fahrzeugs. Das Rampenpumpensystem steuert eine nach hinten klappbare Rampe, um das Ein- und Aussteigen aus dem Fahrzeug einer rollstuhlgebundenen Person zu ermöglichen. Ein Ladesteuersystem, das in das Fahrzeug integriert ist, umfasst eine Ladesteuerung, die das Rampenpumpensystem und das AbsenkpumpenSystem des Fahrzeugs steuert. Als Reaktion auf das Drücken einer Taste einer Fernbedienung steuert ein angetriebenes Türbetriebssystem die Tür. Als Antwort auf Signale, die vom Türbetriebssystem empfangen werden, steuert die Ladesteuerung das Absenkpumpensystem und die Rampe.

Die US 6 825628 B2 beschreibt ein Rampenentfaltungssteuersystem, welches eine Steuerung und einen Senkhebelmotor, der operativ mit der Steuerung gekoppelt ist, umfasst. Dort wird ein Rampenmotor, der betriebsmäßig mit der Steuerung gekoppelt ist, beschrieben. Der Regler erregt den Knickmotor, um ein Fahrzeug abzusenken oder aufzustellen, und erregt den Rampenmotor, um eine Rampe zu entfalten oder zu verstauen. Die Steuerung ist operativ mit einem Kommunikationspfad gekoppelt, und ein Türsteuersystem ist operativ mit der Steuerung gekoppelt. Das Türsteuerungssystem ist zum Überwachen und Steuern des Betriebs einer Tür betriebsfähig. Ein Standard-Steuermodul ist operativ mit dem Kommunikationspfad gekoppelt und ist betreibbar, um Türbedienungsbefehle auf dem Kommunikationspfad zu senden. Die Steuerung verzögert selektiv die Ausführung der Türbedienungsbefehle durch das Türsteuerungssystem, während der Rampenmotor betätigt wird, um die Rampe zu entfalten oder zu verstauen.

Aus der EP 1 918 157 A1 ist eine Hubvorrichtung, insbesondere für ein Transportfahrzeug oder einen Güterumschlagplatz zum Laden, Entladen oder Verschieben von Gütern bekannt. Dabei ist ein Hebelwerk mit zwei dem Anheben und Absenken einer Last dienenden Schwenkarmen vorgesehen, die um eine gemeinsame Achse drehbar gelagert und je mittels eines ersten Gelenks drehbar mit Schubstangen verbunden sind. Die Schubstangen sind je mittels einer ersten bzw. zweiten Antriebseinheit antreibbar. Die Hubvorrichtung weist eine stabile, mittels Montagemitteln im Fahrzeugladeraum oder auf dem Güterumschlagplatz positionierbare Basisvorrichtung auf, die mit zwei zueinander parallelen und mittels wenigstens einer Querstrebe miteinander verbundenen Basisprofilen versehen ist. An den Basisprofilen ist je ein mit dem zugehörigen Schwenkarm verbundenes zweites Gelenk und je ein mit der zugehörigen Antriebseinheit verbundenes drittes Gelenk vorgesehen.

Die bekannten Be- und Entladevorrichtungen haben den Nachteil, dass sie für einen einzelnen Nutzer relativ umständlich zu bedienen sind. Hier ist es wünschenswert, unterstützende Hilfe bei den Be- und Entladevorgängen zu erhalten.

### Offenbarung der Erfindung

Aufgabe der Erfindung ist es daher, die Nachteile des Standes der Technik zu vermeiden und den Be- bzw. Entladevorgang bei Ambulanz- oder Transportfahrzeugen für einen Bediener zu erleichtern.

Erfindungsgemäß wird die Aufgabe dadurch gelöst, dass bei einer Be- und Entladevorrichtung für Ambulanz- oder Transportfahrzeuge der eingangs genannten Art
f) eine von einem Motor angetriebene Schub- oder Zugvorrichtung eine Krankenbahre oder Transportgut auf die Hubplattform bzw. den Lift bewegt, wobei der Motor für die Schub- oder Zugvorrichtung von der Antriebssteuerung betätigt wird.

Bei Be- und Entladevorrichtungen sind vielfältige Funktionen von dem Bedienpersonal vorzunehmen, wenn ein Fahrzeug beladen oder entladen wird. Zunächst einmal muss beispielsweise die Laderampe ausgefahren werden und die Türen des Frachtraums müssen geöffnet werden. Die Laderampe muss in eine gewünschte Position bewegt werden, damit die Fracht darauf geschoben werden kann. Hier hat das Bedienpersonal zahlreiche Funktionen durchzuführen, bevor es mit dem Entladen oder Beladen überhaupt beginnen kann. Die vorliegende Erfindung erleichtert es dem Bedienpersonal erheblich das Fahrzeug zu entladen bzw. zu beladen. Durch eine einfache Betätigung der Antriebssteuerung werden die verschiedenen Funktionen der Funktionsvorrichtungen zum Be- und zum Entladen automatisch durchgeführt.

Eine vorteilhafte Ausgestaltung der Erfindung besteht darin, dass die erste Funktionsvorrichtung als Tür und/oder Tor ausgebildet ist. Die Tür bzw. das Tor müssen oft in einer bestimmten Reihenfolge im Hinblick auf die anderen Funktionsvorrichtungen der Be- und Entladevorrichtung geöffnet und geschlossen werden. Daher ist es sinnvoll, eine Funktionsvorrichtung als Tür bzw. Tor auszugestalten, die über den Antrieb von der Antriebssteuerung gesteuert wird.

In einer weiteren bevorzugten Ausbildung der erfindungsgemäßen Be- und Entladevorrichtung für Ambulanz- oder Transportfahrzeuge Ist die zweite Funktionsvorrichtung als Hubplattform oder Lift ausgebildet. Auch diese Funktionsvorrichtung muss mit der oder mit den anderen Funktionsvorrichtungen wie der Tür bzw. dem Tor koordiniert werden. Die Koordination erfolgt wiederum über den Antrieb welcher von der Antriebssteuerung gesteuert wird.

In einer weiteren zweckmäßigen Ausgestaltung der Erfindung koordiniert die Antriebssteuerung den Antrieb der ersten und der zweiten Funktionsvorrichtung nach einem Funktionsablaufplan. Die Antriebssteuerung koordiniert auf diese Weise die verschiedenen Abläufe und Reihenfolgen, wie die Prozesse zum Beladen oder zum Entladen zu erfolgen haben. Durch die Antriebssteuerung können die Vorgänge exakter und schneller durchgeführt werden, als es mit menschlicher Kraft möglich wäre. Die Vorgänge können beim Beladen oder Entladen an dem Fahrzeug optimiert werden. Durch die Ablaufpläne, welche von der Antriebssteuerung abgearbeitet werden, werden viele unnötige Bedienfehler bei den Prozessen vermieden.

Eine bevorzugte Ausgestaltung der erfindungsgemäßen Be- und Entladevorrichtung für Ambulanz- oder Transportfahrzeuge besteht ferner darin, dass der Betätigungsmechanismus kabellos die Antriebssteuerung betätigt. Diese Maßnahme erleichtert dem Bedienpersonal das Betätigen der Be- und Entladevorrichtung. Für die kabellose Verbindung eignen sich beispielsweise Funk- oder Infrarotverbindungen. Der Betätigungsmechanismus kann so von jedem beliebigen Ort im Empfangsbereich bedient werden. Die Technik für Funkverbindungen oder Infrarotverbindungen Ist mittlerweile kostengünstig und leicht zu verarbeiten. Während die Kabel im Fahrzeug verlegt werden müssen, ist dieses bei einer kabellosen Verbindung nun nicht mehr erforderlich.

In einer weiteren zweckmäßigen Ausgestaltung der Erfindung ist eine von einem Motor angetriebene Schub- oder Zugvorrichtung vorgesehen, welche eine Krankenbahre oder Transportgut auf die Hubplattform bzw. den Lift bewegt.

Es hat sich als eine vorteilhafte Ausgestaltung der Erfindung erwiesen, wenn für die Be- und Entladevorrichtung von Ambulanz- oder Transportfahrzeugen der Motor für die Schub- oder Zugvorrichtung von der Antriebssteuerung betätigt wird. Hierdurch werden einige Steuerschritte eingespart, weil nicht jeder einzelne Motor eine eigene Antriebssteuerung benötigt. Zudem können die Antriebe bzw. Motoren in Ihrem Ablauf miteinander koordiniert werden.

Vorzugsweise ist bei der erfindungsgemäßen Be- und Entladevorrichtung für Ambulanz- oder Transportfahrzeuge ein Sensor vorgesehen ist, welcher eine Fehlfunktion und/oder ein Hindernis für die Funktionsvorrichtungen erkennt. Bei jeder technischen Anlage können technische Fehler, beispielsweise durch Materialermüdung, auftreten. Auch Hindernisse können eine Fehlfunktion der Be- und Entladevorrichtung verursachen. Beispielsweise kann ein Gegenstand, eine Person oder Fahrzeug im Bereich der Hubplattform beim Ausfahren stehen. Wenn der Sensor ein solches Hindernis nicht erkennen würde und den Vorgang über seine Antriebssteuerung abbrechen würde, könnte dieses Hindernis zu Schaden kommen.

In einer weiteren vorteilhaften Ausbildung der erfindungsgemäßen Be- und Entladevorrichtung sind Sensoren vorgesehen, welche der Antriebssteuerung den jeweiligen Zustand der Funktionsvorrichtungen signalisieren. Diese Maßnahme dient dazu, dass der Antriebssteuerung jederzeit bekannt ist, in welchem Zustand die Funktionsvorrichtungen sind. Beispielsweise wird signalisiert, wie weit eine Tür bzw. ein Tor geöffnet sind, oder in welcher Position sich die Hubplattform gerade befindet. Die Sensoren sind vorzugsweise so eingestellt, dass sie die Zustände immer aktuell an die Antriebssteuerung signalisieren. Bei Bedarf können solche Signalzustände auch in einem Speicher der Antriebssteuerung zur späteren Nachverfolgung gespeichert werden.

Eine weitere vorteilhafte Ausgestaltung der erfindungsgemäßen Be- und Entladevorrichtung für Ambulanz- oder Transportfahrzeuge ergibt sich dadurch, dass die Antriebe für die Funktionsvorrichtungen hydraulisch und/oder elektrisch ausgebildet sind. Hydraulische oder elektrotechnische Antriebe lassen sich in Kraftfahrzeugen besonders gut realisieren. Diese Antriebsquellen sind nämlich oft bereits in einem solchen Fahrzeug vorhanden, Sie lassen sich daher in geeigneter Weise mit den Funktionsvorrichtungen gemeinsam verwenden. Dies spart Gewicht am Fahrzeug und hält die Herstellungskosten gering.

Eine vorteilhafte Ausgestaltung der erfindungsgemäßen Be- und Entladevorrichtung für Ambulanz- oder Transportfahrzeuge ergibt sich weiterhin dadurch, dass die Antriebssteuerung einen Verschlussantrieb eines Verriegelungsmechanismus zum Verriegeln oder zum Entriegeln der Tür und/oder des Tors ansteuert. Die Maßnahme dient dazu, einen weiteren Prozess beim Be- und Entladen zu automatisieren. Dazu gehört auch die Verriegelung der Tür bzw. des Tors. Je nach Anforderung müssen diese geöffnet oder geschlossen werden, wobei dieser Prozess mit den anderen Funktionen über die Antriebssteuerung koordiniert wird. Denn eine Tür muss zuerst entriegelt werden, bevor sie geöffnet werden darf. Umgekehrt sollte die Tür natürlich erst verschlossen werden, bevor sie verriegelt wird. Diese Abläufe können nur über die Antriebssteuerung koordiniert werden.

In einer weiteren bevorzugten Ausbildung der erfindungsgemäßen Be- und Entladevorrichtung für Ambulanz- oder Transportfahrzeuge ist die Tür und/oder das Tor als Laderampe ausgebildet. Hierdurch erhalten die Tür bzw. das Tor eine doppelte Funktion. Als Laderampe können Krankenbahren oder andere Lasten in den Transportraum bewegt werden. Bei Bedarf kann die Laderampe auch gleichzeitig als Hubplattform verwendet werden.

Weitere Ausgestaltungen und Vorteile ergeben sich aus dem Gegenstand der Unteransprüche, sowie den Zeichnungen mit den dazugehörigen Beschreibungen, Ein Ausführungsbeispiel ist nachstehend unter Bezugnahme auf die beigefügten Zeichnungen näher erläutert. Die Erfindung soll nicht alleine auf diese aufgeführten Ausführungsbeispiele beschränkt werden. Sie dienen lediglich zur näheren Erläuterung der Erfindung. Die Erfindung soll sich auf alle Gegenstände beziehen, die jetzt und zukünftig der Fachmann als naheliegend zur Realisierung der Erfindung heranziehen würde.

### Kurze Beschreibung der Zeichnung

- Fig. 1: zeigt in einer schematischen Prinzipskizze ein Ambulanzfahrzeug mit einer erfindungsgemäßen Be- und Entladevorrichtung, bei der die Rampe hochgeschwenkt ist.
- Fig. 2: zeigt in einer schematischen Prinzipskizze gemäß Fig. 1 ein Ambulanzfahrzeug, bei der die Rampe in eine horizontale Position ausgefahren ist.
- Fig. 3: zeigt in einer schematischen Prinzipskizze gemäß den Figuren 1 und 2 ein Ambulanzfahrzeug, bei dem die Hecktüre geöffnet ist.
- Fig. 4: zeigt in einer schematischen Prinzipskizze gemäß den Figuren 1, 2 und 3 ein Ambulanzfahrzeug, bei dem die Rampe auf die Ebene des Frachtraums angehoben ist.
- Fig. 5: zeigt in einer schematischen Prinzipskizze gemäß den vorherigen Figuren ein Ambulanzfahrzeug mit einer erfindungsgemäßen Be- und Entladevorrichtung, bei der die Krankenbahre auf die Rampe geschoben ist.
- Fig. 6: zeigt in einer schematischen Prinzipskizze gemäß den vorherigen Figuren ein Ambulanzfahrzeug, bei der die Rampe mit der Krankenbahre auf den Boden abgesenkt ist.
- Fig. 7: zeigt in einer schematischen Prinzipskizze gemäß den Figuren 1 bis 6 ein Ambulanzfahrzeug, bei dem die Krankenbahre von der Rampe auf den Boden geschoben wurde.
- Fig. 8: zeigt in einer schematischen Prinzipskizze gemäß den vorherigen Figuren 1 bis 7 ein Ambulanzfahrzeug, bei dem die Rampe wieder angehoben ist.
- Fig. 9: zeigt in einer schematischen Prinzipskizze gemäß den Figuren 1, 2 und 3 ein Ambulanzfahrzeug, bei dem die Rampe der erfindungsgemäßen Be- und Entladevorrichtung wieder geschwenkt ist.

### Bevorzugtes Ausführungsbeispiel

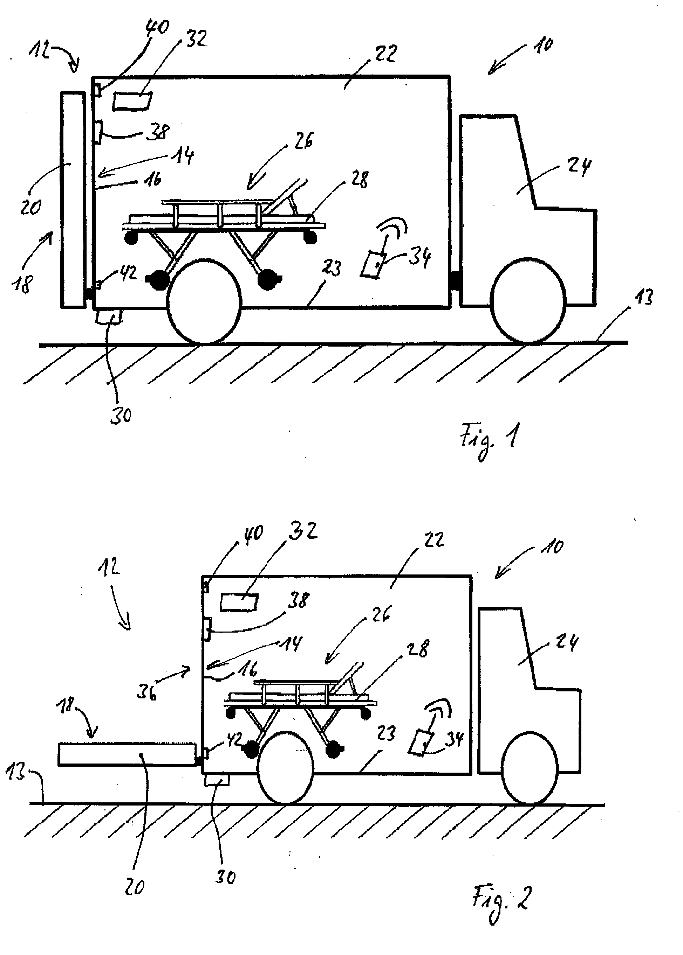

Fig. 1 zeigt schematisch ein Ambulanzfahrzeug 10 mit einer erfindungsgemäßen Be- und Entladevorrichtung 12. Das Ambulanzfahrzeug 10 steht auf einer Ebene 13 des Straßenbodens. Die Be- und Entladevorrichtung 12 enthält eine erste Funktionsvorrichtung 14, welche als Hecktüre 16 ausgebildet ist. Weiterhin umfasst die Be- und Entladevorrichtung 12 eine zweite Funktionsvorrichtung 18, welche als Rampe 20 ausgebildet ist. Die als Rampe 20 ausgebildete zweite Funktionsvorrichtung 18 ist in vorliegender Abbildung gemäß Fig. 1 gegen einen Kofferaufbau 22 des Ambulanzfahrzeugs 10 hochgeschwenkt. Der Boden des Kofferaufbaus 22 liegt in einer Ebene 23, welche über der Ebene 13 des Straßenbodens liegt.

Mit 24 wird die Fahrerzelle des Ambulanzfahrzeugs 10 bezeichnet. In dem Kofferaufbau 22 befindet sich symbolisch eine Fracht 26, welche In dem Ambulanzfahrzeug 10 naturgemäß aus einer fahrbaren Krankenbahre 28 besteht.

Mit einem Antrieb 30, welcher aus einem Elektromotor besteht, wird die Rampe 20 angetrieben. Eine Antriebssteuerung 32 steuert die Bewegung des Antriebs 30 und somit auch die Bewegung der Rampe 20. Die Antriebssteuerung 32 wird wiederum von einem Betätigungsmechanismus 34 betätigt, welche von einem Nutzer bedient wird. Der Betätigungsmechanismus 34 sendet hierfür seine Befehle, wie das Öffnen oder das Schließen einer Hecköffnung 36, als Funksignale an die Antriebssteuerung 32. Die Antriebssteuerung 32 kommuniziert entsprechend mit dem Betätigungsmechanismus 34 über Funk.

Die Antriebssteuerung 32 steuert ferner auch einen Antrieb 38 für die Hecktüre 16. Die Antriebssteuerung 32 besteht aus einer prozessorgesteuerten Steuereinheit mit einem Speicher. Die Antriebssteuerung 32 erhält die jeweiligen Positionen und Zustände der Funktionsvorrichtungen 14, 18 über Sensoren 40. Sensoren 42 erfassen Hindernisse oder Fehlfunktionen der Funktionsvorrichtungen 14, 18. In der Antriebssteuerung 32 sind die Funktionsabläufe zur Steuerung der Antriebe 30, 38 gespeichert. Je nachdem, welcher Befehl von dem Betätigungsmechanismus 34 an die Antriebssteuerung 32 gesendet wird, wird ein bestimmtes Ablaufprogramm für das öffnen bzw. Schließen der Hecköffnung 36 abgearbeitet,

Fig. 2 zeigt ein Ambulanzfahrzeug 10 entsprechend der Fig. 1 jedoch mit ausgeklappter Rampe 20. Soweit sich die Figuren entsprechen werden auch identische Bezugszeichen verwendet. Sobald der Betätigungsmechanismus 34 zum Öffnen betätigt wurde, wird in einem ersten Schritt die Rampe 20 in eine horizontale Position gebracht. Für diesen Prozess wird die Rampe 20 dabei von dem Antrieb 30 angetrieben. Die Antriebssteuerung 32 steuert dazu den Antrieb 30.

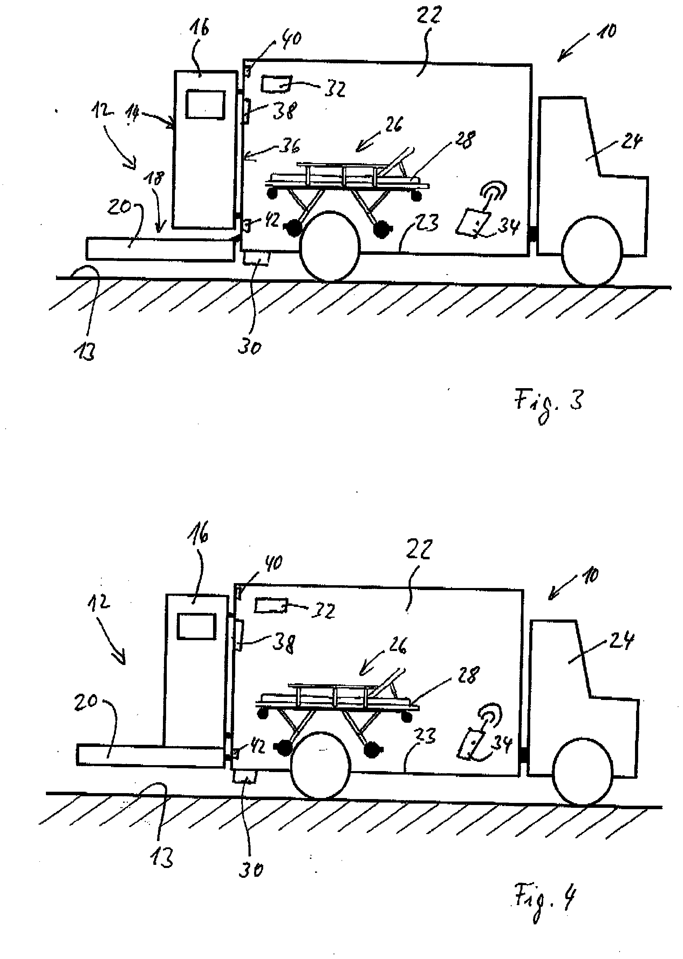

In Fig. 3 wird das Ambulanzfahrzeug 10 entsprechend den Figuren 1 und 2 dargestellt. In dieser Abbildung ist jedoch die die Hecktüre 16 geöffnet. Soweit sich die Figuren entsprechen werden auch identische Bezugszeichen verwendet. Die Hecktüre 16 wird von dem Antrieb 38 betätigt. Der Antrieb 38 wird wiederum von der Antriebssteuerung 32 gesteuert. Die Ebene 13 der ersten Funktionsvorrichtung 14, nämlich der Rampe 20, befindet sich leicht unterhalb der Höhe, wie die Ebene 23 des Bodens des Kofferaufbaus 22.

Die Fig. 4 zeigt das Ambulanzfahrzeug 10 wie es auch in den Figuren 1, 2 und 3 dargestellt Ist. Soweit sich die Figuren entsprechen werden auch identische Bezugszeichen verwendet. Gegenüber der Fig. 3 befindet sich die Ebene 13 der Rampe 20 nun auf der Ebene 23 des Kofferaufbaus 22. Die Rampe 20 wurde dazu geringfügig angehoben.

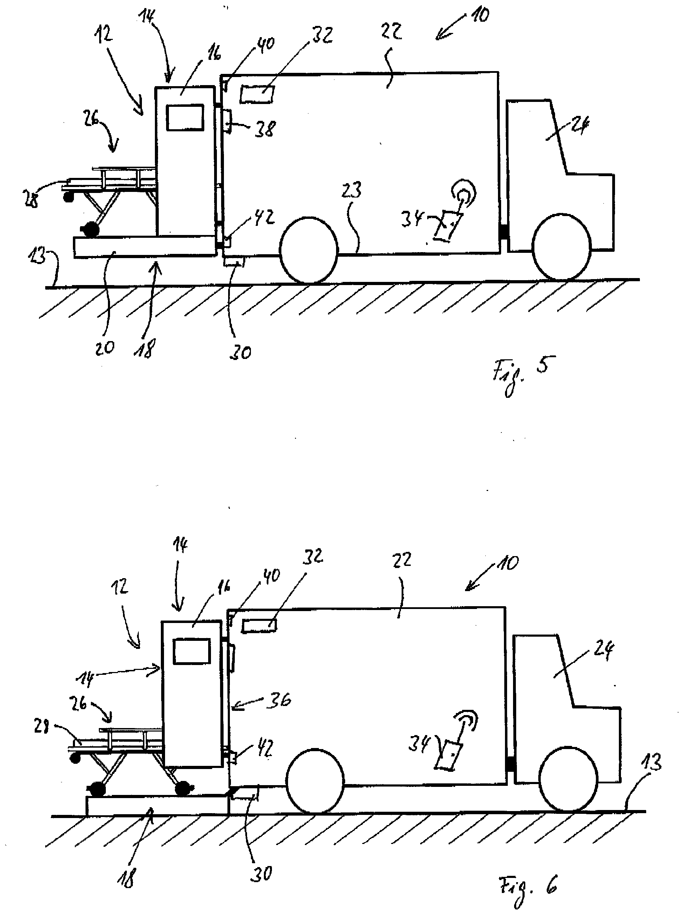

Fig, 5 zeigt das Ambulanzfahrzeug 10 mit der Be- und Entladevorrichtung 12, wie es auch in den vorherigen Figuren dargestellt wird. Soweit sich die Figuren entsprechen werden auch identische Bezugszeichen verwendet. In dieser Abbildung von Fig. 5 ist die Krankenbahre 28 auf die Rampe 20 geschoben. Dies lässt sich nur vernünftig realisieren, weil die Ebene 13 der Rampe 20 an die Ebene 23 des Kofferaufbaus 22 angeglichen wurde.

In Fig. 6 wird das Ambulanzfahrzeug 10 entsprechend den vorherigen Figuren dargestellt. Soweit sich die Figuren entsprechen werden auch Identische Bezugszeichen verwendet. Hier ist ein weiterer Schritt bei der Entladung der Krankenbahre 28 vorgenommen worden. Die Rampe 20 mit der Krankenbahre 28 ist nun auf die Ebene 13 des Straßenbodens abgesenkt.

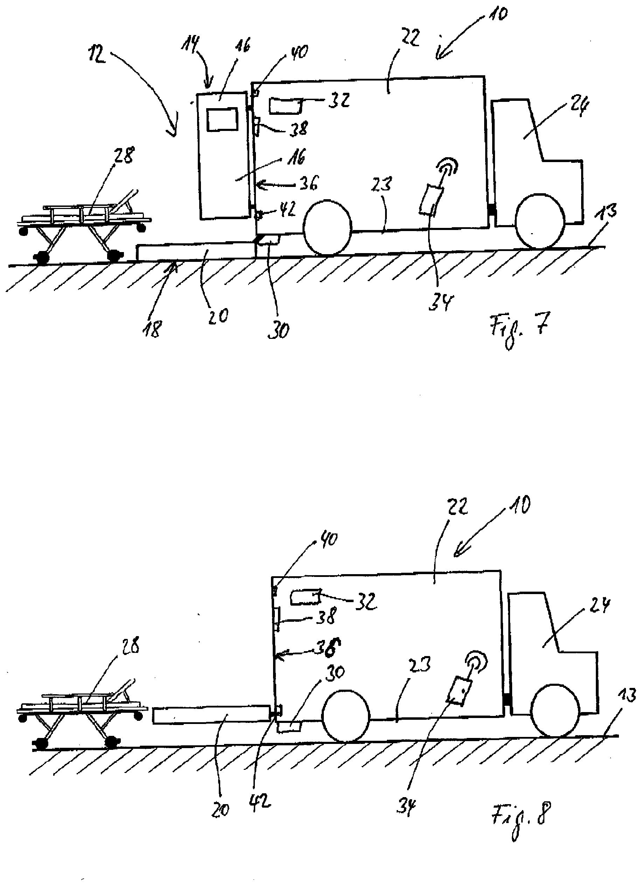

Da die Rampe 20 nun das Niveau des Straßenboden erreicht hat, kann, wie in Fig. 7 gezeigt, die Krankenbahre 28 von der Rampe 20 heruntergeschoben werden. Die Fig. 7 entspricht weitestgehend den vorherigen Figuren. Die Bezugszeichen werden daher entsprechend verwendet.

In Fig. 8 wird die Prinzipskizze des Ambulanzfahrzeugs 10 gemäß den vorherigen Figuren 1 bis 7 dargestellt. In dieser Fig. ist die Rampe allerdings wieder leicht angehoben, damit sie wieder die Hecköffnung 36 schließen kann. Zuvor wurde jedoch die Hecktüre 16 über den Antrieb 38 geschlossen. Soweit sich die Figuren mit den vorherigen Figuren entsprechen werden auch bei dieser Abbildung identische Bezugszeichen verwendet.

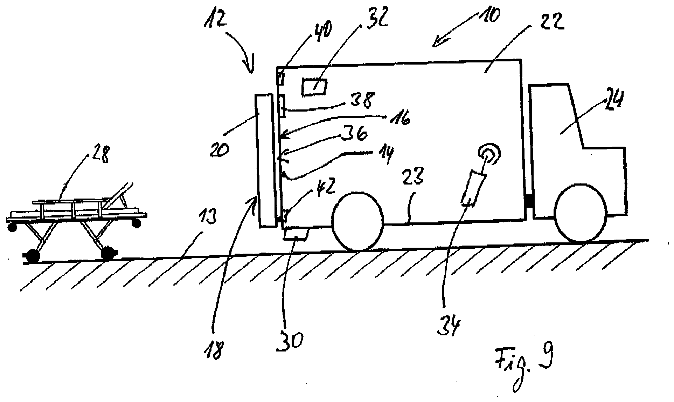

Fig. 9 zeigt analog zu der Fig. 1 das Ambulanzfahrzeug 10, bei dem die Rampe 20 der Be- und Entladevorrichtung 12 wieder vor die Hecköffnung 36 geschwenkt ist. Soweit sich die Figuren entsprechen werden auch hier identische Bezugszeichen verwendet.

Ein Nutzer initiiert über den Betätigungsmechanismus 34 den Prozess zum Öffnen oder zum Schließen der Be- und Entladevorrichtung 12. Der Betätigungsmechanismus 34 signalisiert der Antriebssteuerung 32 einen Prozess zu starten. Die Antriebssteuerung 32 arbeitet je nach Bedarf ein Funktionsablaufplan zum Öffnen oder zum Schließen ab. Hier ist vor allem die Reihenfolge festgelegt, welche bei den einzelnen Prozessen unterschiedlich ist. Die Steuerung der einzelnen Vorgänge erfolgt dabei durch Ansteuerung der Antriebe 30, 38, welche die Funktionsvorrichtungen 14 bzw. 18 betätigen. Die Sensoren 40 und 42 überwachen dabei die Prozesse. Bei Fehlern oder Hindernissen werden die Prozesse unmittelbar abgebrochen.
- 10: Ambulanzfahrzeug
- 12: Be- und Entladevorrichtung
- 13: Ebene des Straßenbodens
- 14: Erste Funktionsvorrichtung
- 16: Hecktüre
- 18: Zweite Funktionsvorrichtung
- 20: Rampe
- 22: Kofferaufbau
- 23: Ebene des Bodens des Kofferaufbaus
- 24: Fahrerzelle
- 26: Fracht
- 28: Krankenbahre
- 30: Antrieb für die Rampe
- 32: Antriebssteuerung
- 34: Betätigungsmechanismus
- 36: Hecköffnung
- 38: Antrieb für die Hecktüre
- 40: Sensoren
- 42: Sensoren

## Patentansprüche

1. Be- und Entladevorrichtung (12) für Ambulanz- oder Transportfahrzeuge (10) enthaltend:
a) eine Be- und Entladeöffnung (36) mit einer ersten Funktionsvorrichtung (14) zum Be- und Entladen,
b) einen Antrieb (38) zum Betätigen der ersten Funktionsvorrichtung (14),
c) eine Antriebssteuerung (32), welche den Antrieb (38) ansteuert,
d) einen Betätigungsmechanismus (34) zum Betätigen der Antriebssteuerung (32),
**e)** eine zweite Funktionsvorrichtung (18) zum Be- und Entladen, deren Antrieb (30) von der Antriebssteuerung (32) angesteuert wird,
**dadurch gekennzeichnet, dass**
f) eine von einem Motor angetriebene Schub- oder Zugvorrichtung eine Krankenbahre (28) oder Transportgut auf die zweite Funktionsvorrichtung (18), ausgebildet als eine Rampe (20), eine Hubplattform bzw. den Lift bewegt, wobei der Motor für die Schub- oder Zugvorrichtung von der Antriebssteuerung (32) betätigt wird.

2. Be- und Entladevorrichtung (12) für Ambulanz- oder Transportfahrzeuge (10) nach Anspruch 1, **dadurch gekennzeichnet, dass** die erste Funktionsvorrichtung (14) als Tür (16) und/oder Tor ausgebildet ist.

3. Be- und Entladevorrichtung (12) für Ambulanz- oder Transportfahrzeuge (10) nach einem der Ansprüche 1 oder 2, **dadurch gekennzeichnet, dass** die zweite Funktionsvorrichtung (18) als Hubplattform oder Lift ausgebildet ist.

4. Be- und Entladevorrichtung (12) für Ambulanz- oder Transportfahrzeuge (10) nach einem der Ansprüche 1 bis 3, **dadurch gekennzeichnet, dass** die Antriebssteuerung (32) den Antrieb (30, 38) der ersten und der zweiten Funktionsvorrichtung (14, 18) nach einem Funktionsablaufplan koordiniert.

5. Be- und Entladevorrichtung (12) für Ambulanz- oder Transportfahrzeuge (10) nach einem der Ansprüche 1 bis 4, **dadurch gekennzeichnet, dass** der Betätigungsmechanismus (34) kabellos die Antriebssteuerung (32) betätigt.

6. Be- und Entladevorrichtung (12) für Ambulanz- oder Transportfahrzeuge (10) nach einem der Ansprüche 1 bis 5, **dadurch gekennzeichnet, dass** ein Sensor (42) vorgesehen ist, welcher eine Fehlfunktion und/oder ein Hindernis für die Funktionsvorrichtungen (14, 18) erkennt.

7. Be- und Entladevorrichtung (12) für Ambulanz- oder Transportfahrzeuge (10) nach einem der Ansprüche 1 bis 6, **dadurch gekennzeichnet, dass** Sensoren (40) vorgesehen sind, welche der Antriebssteuerung (32) den jeweiligen Zustand der Funktionsvorrichtungen (14, 18) signalisieren.

8. Be- und Entladevorrichtung (12) für Ambulanz- oder Transportfahrzeuge (10) nach einem der Ansprüche 1 bis 7, **dadurch gekennzeichnet, dass** die Antriebe (30, 38) für die Funktionsvorrichtungen (14, 18) hydraulisch und/oder elektrisch ausgebildet sind.

9. Be- und Entladevorrichtung (12) für Ambulanz- oder Transportfahrzeuge (10) nach einem der Ansprüche 2 bis 8, **dadurch gekennzeichnet, dass** die Antriebssteuerung (32) einen Verschlussantrieb eines Verriegelungsmechanismus zum Verriegeln oder zum Entriegeln der Tür (16) und/oder des Tors ansteuert.

10. Be- und Entladevorrichtung (12) für Ambulanz- oder Transportfahrzeuge (10) nach einem der Ansprüche 2 bis 9, **dadurch gekennzeichnet, dass** die Tür (16) und/oder das Tor als Laderampe ausgebildet sind.

## Claims

1. Loading and unloading device (12) for ambulances or transport vehicles (10) comprising:
a) a loading and unloading opening (36) with a first function device (14) for loading and unloading,
b) a drive (38) to activate the first function device (14),
c) a drive controller (32), which controls the drive (38),
d) an activation mechanism (34) to activate the drive controller (32),
e) a second function device (18) for loading and unloading whose drive (30) is controlled by the drive controller (32),
**characterized in that**
f) a pushing or pulling device driven by a motor for a stretcher (28) or cargo on the second function device (18), designed as a ramp (20), moves a lifting platform and/or the lift, whereby the motor for the pushing or pulling device is activated by the drive controller (32).

2. Loading and unloading device (12) for ambulances or transport vehicles (10) according to Claim 1, **characterized in that** the first function device (14) is designed as a door (16) and/or gate.

3. Loading and unloading device (12) for ambulances or transport vehicles (10) according to one of Claims 1 or 2, **characterized in that** the second function device (18) is designed as a lifting platform or lift.

4. Loading and unloading device (12) for ambulances or transport vehicles (10) according to one of Claims 1 to 3, **characterized in that** the drive controller (32) coordinates the drives (30, 38) of the first and second function device (14,18) according to a functional flowchart.

5. Loading and unloading device (12) for ambulances or transport vehicles (10) according to one of Claims 1 to 4, **characterized in that** the activation mechanism (34) activates the drive controller (32) wirelessly.

6. Loading and unloading device (12) for ambulances or transport vehicles (10) according to one of Claims 1 to 5, **characterized in that** a sensor (42) is provided, which a detects a malfunction of and/or an obstacle to the function devices (14,18).

7. Loading and unloading device (12) for ambulances or transport vehicles (10) according to one of Claims 1 to 6, **characterized in that** sensors (40) are provided, which signal the particular state of the function devices (14,18) to the drive controller (32).

8. Loading and unloading device (12) for ambulances or transport vehicles (10) according to one of Claims 1 to 7, **characterized in that** the drives (30, 38) for the function devices (14, 18) are designed as hydraulic and/or electric drives.

9. Loading and unloading device (12) for ambulances or transport vehicles (10) according to one of Claims 2 to 8, **characterized in that** the drive controller (32) controls a lock drive of a locking mechanism to lock or unlock the door (16) and/or the gate.

10. Loading and unloading device (12) for ambulances or transport vehicles (10) according to one of Claims 2 to 9, **characterized in that** the door (16) and/or the gate are designed as a loading ramp.

## Revendications

1. Dispositif de chargement et de déchargement (12) pour véhicules ambulance ou véhicules de transport (10), comprenant
(a) une ouverture de chargement et de déchargement (36) munie d'un premier dispositif fonctionnel (14) destiné au chargement et au déchargement,
(b) un dispositif d'entraînement (38) destiné à actionner le premier dispositif fonctionnel (14),
(c) une commande de dispositif d'entraînement (32) qui commande le dispositif d'entraînement (38),
(d) un mécanisme d'actionnement (34) destiné à actionner la commande de dispositif d'entraînement (32),
(e) un second dispositif de fonctionnement (18) destiné au chargement et au déchargement dont le dispositif d'entraînement (30) est commandé par la commande de dispositif d'entraînement (32),
**caractérisé en ce que**
(f) un dispositif de poussée ou de traction entraîné par un moteur déplace un brancard (28) ou une marchandise transportée ' sur le second dispositif de fonctionnement (18), réalisé sous forme de rampe (20), ou de plate-forme de levage ou bien d'élévateur, le moteur destiné au dispositifs de poussée ou de traction étant actionné par la commande, de dispositif d'entraînement (32).

2. Dispositif de chargement et de déchargement (12) pour véhicules ambulance ou véhicules de transport (10), selon la revendication 1, **caractérisé en ce que** le premier dispositif fonctionnel (14) est configuré sous forme de portière (16) et/ou de porte.

3. Dispositif de chargement et de déchargement (12) pour véhicules ambulance ou véhicules de transport (10), selon l'une quelconque des revendications 1 ou 2, **caractérisé en ce que** le second dispositif fonctionnel (18) est configuré sous forme de plate-forme de levage ou d'élévateur,

4. Dispositif de chargement et de déchargement (12) pour véhicules ambulance ou véhicules de transport (10), selon l'une quelconque des revendications 1 à 3, **caractérisé en ce que** la commande de dispositif d'entraînement (32) coordonne le dispositif d'entraînement (30, 38) du premier et du second dispositif fonctionnel (14, 18) en fonction d'un diagramme fonctionnel.

5. Dispositif de chargement et de déchargement (12) pour véhicules ambulance ou véhicules de transport (10), selon l'une quelconque des revendications 1 à 4, **caractérisé en ce que** le mécanisme d'actionnement (34) actionne la commande de dispositif d'entraînement (32) sans câble.

6. Dispositif de chargement et de déchargement (12) pour véhicules ambulance ou véhicules de transport (10), selon l'une quelconque des revendications 1 à 5, **caractérisé en ce qu'**il est prévu un capteur (42) détectant un défaut de fonctionnement et/ou un obstacle pour les dispositifs fonctionnels (14, 18).

7. Dispositif de chargement et de déchargement (12) pour véhicules ambulance ou véhicules de transport (10), selon l'une quelconque des revendications 1 à 6, **caractérisé en ce qu'**il est prévu des capteurs (40) signalisant à la commande d'entraînement (32) l'état respectif des dispositifs fonctionnels (14, 18).

8. Dispositif de chargement et de déchargement (12) pour véhicules ambulance ou véhicules de transport (10), selon l'une quelconque des revendications 1 à 7, **caractérisé en ce que** les dispositifs d'entraînement (30, 38) destinés aux dispositifs fonctionnels (14, 18) sont réalisés sous forme hydraulique et/ou électrique.

9. Dispositif de chargement et de déchargement (12) pour véhicules ambulance ou véhicules de transport (10), selon l'une quelconque des revendications 2 à 8, **caractérisé en ce que** la commande d'entraînement (32) commande un dispositif d'entraînement de fermeture d'un mécanisme de verrouillage destiné à verrouiller ou à déverrouiller la portière (16) et/ou la porte.

10. Dispositif de chargement et de déchargement (12) pour véhicules ambulance ou véhicules de transport (10), selon l'une quelconque des revendications 2 à 9, **caractérisé en ce que** la portière (16) et/ou la porte est réalisée sous forme de rampe de chargement.
